# EUROPÄISCHE PATENTSCHRIFT

(11) **EP 4 551 858 B1**
(45) Veröffentlichungstag und Bekanntmachung des Hinweises auf die Patenterteilung: **29.07.2026**
(21) Anmeldenummer: 23733745.6
(22) Anmeldetag: 19.06.2023
(51) Int. Cl.: F16L 13/14, F16L 37/091, F16L 37/092, F16L 37/084

(54) **KLEMMRING FÜR EINEN FITTING UND FITTING MIT EINEM SOLCHEN KLEMMRING**
CLAMPING RING FOR A FITTING, AND FITTING COMPRISING SUCH A CLAMPING RING
BAGUE DE SERRAGE POUR UN RACCORD, ET RACCORD COMPRENANT UNE TELLE BAGUE DE SERRAGE

(30) Priorität: 05.07.2022 DE 102022116679
(43) Veröffentlichungstag der Anmeldung: 14.05.2025
(73) Patentinhaber: Viega Technology GmbH & Co. KG, 57439 Attendorn (DE)
(72) Erfinder: DÜPERTHAL, Fabian, 57368 Lennestadt (DE); KÖSTER, Paul, 57462 Olpe (DE); ROCKSLOH, Stefan, 57439 Attendorn (DE); KRUGMANN, Jürgen, 58540 Meinerzhagen (DE)
(74) Vertreter: Cohausz & Florack
(86) Internationale Anmeldenummer: PCT/EP2023/066437
(87) Internationale Veröffentlichungsnummer: WO 2024/008426

(56) Entgegenhaltungen:
- EP-A1- 2 242 947
- EP-A1- 3 051 199
- EP-A1- 3 347 637
- JP-A- 2014 190 366
- US-A- 4 119 335
- US-A1- 2012 061 956
- US-A1- 2016 053 783

## Beschreibung

Die Erfindung betrifft einen Klemmring für ein Fitting für ein von außen abzudichtendes Rohr sowie einen Fitting zum Verbinden mit einem von außen abzudichtenden Rohr mit einem Klemmring.

Der für die vorliegende Erfindung relevante technische Bereich ist die baustellenseitige Installation von Rohrleitungssystemen, bei der allgemein für das Leiten und Führen eines Fluids, also einer Flüssigkeit oder eines Gases ein aus Rohrabschnitten und Fittings bestehendes Rohrleitungssystem installiert wird. Als Fitting wird grundsätzlich ein Verbindungsstück für eine Rohrleitung verstanden, und ein Fitting wird am häufigsten zur Verbindung von zwei oder mehreren Rohrabschnitten eingesetzt. Das Fitting weist dementsprechend bevorzugt zwei oder mehr Pressabschnitte beispielsweise in Form von Presshülsen auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist das Fitting einer Armatur nur einen Pressabschnitt auf, um ein Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels einer Pressbacke radial nach innen so umgeformt wird, dass eine dauerhafte und dichte, gegebenenfalls sogar unlösbare Verbindung hergestellt wird. Die Fittings können dabei mit einem Dichtungsmittel, beispielsweise mit einem O-Ring, versehen sein, das die Dichtheit der Verbindung gewährleistet, oder auch mittels eines direkten Kontakts der Materialien des Rohrabschnitts und des Fittings, beispielweise metallisch dichtend ausgebildet sein.

Als Presstechnik für ein radiales Umformen des Pressabschnittes kommen vorwiegend radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken.

Die zuvor allgemein beschriebenen Rohrleitungssysteme dienen insbesondere einem Transport von Trink- oder Heizungswasser, von Gas zum Betrieb einer Heizungsanlage oder von Industriegasen. Grundsätzlich kann jedes fluide Medium in den Rohrleitungen transportiert werden.

Bei Pressfittings wird unterschieden, ob ein Rohr beim Verpressen von außen abgedichtet und fixiert wird oder ob zumindest ein Teil des Fittings, beispielsweise in Form einer Stützhülse von innen das abzudichtende Rohr stabilisiert. Die vorliegende Erfindung betrifft die Art von Fittings, bei denen das Rohr von außen abgedichtet und fixiert wird. Das schließt grundsätzlich nicht aus, dass auch eine innerhalb des Rohres angeordnete Komponente des Fittings angeordnet wird, in der Regel ist das aber nicht der Fall.

Als Materialien für von außen abzudichtende Rohre werden einerseits feste Werkstoffe, insbesondere metallische Werkstoffe eingesetzt. Als feste Werkstoffe kommen auch feste Kunststoffe in Frage. Als Materialien kommen hierfür in Frage insbesondere Metalle beispielsweise Edelstähle wie ferritische Stähle wie 1.4520, 1.4521, austenitische Stähle wie 1.4404, Duplex-Stähle wie 1.4462, Rotguss, SiBr, Kupfer, aber auch feste Kunststoffe wie beispielsweise vernetztes Polyethylen (PE-X), Polyethylen erhöhter Temperaturbeständigkeit (PE-RT), Polyvenylchlorid (PVC) sowie Polypropylen (PP) bei entsprechenden Wandstärken zum Einsatz. Des Weiteren können Mehrschichtverbundrohre ausreichend starr für eine Abdichtung von außen ausgeführt sein, beispielsweise über eine dickere Aluminium-Lage, ebenso können auch faserverstärkte Rohre eingesetzt werden.

Die beschriebenen Fittings und deren Komponenten bestehen bevorzugt aus einem Metall, um eine Verformbarkeit bei ausreichender Härte und Formstabilität nach dem Umformen zu gewährleisten. Als Metalle kommen die für die starren Rohre bereits genannten Metalle in Frage, beispielsweise Edelstähle wie ferritische Stähle wie 1.4520, 1.4521, austenitische Stähle wie 1.4404, Duplex-Stähle wie 1.4462, Rotguss, SiBr, Kupfer.

Die beschriebenen Fittings und deren Komponenten können jedoch auch aus einem nicht-metallischen Werkstoff bzw. Kunststoff bestehen, wenn der nicht-metallische Werkstoff ausreichende Eigenschaften für ein Verpressen und dauerhaftes Verbinden mit Rohren ermöglicht. Als Werkstoffe kommen hier beispielsweise die folgenden Stoffe in Frage: vernetztes Polyethylen (PE-X), Silan-vernetztes Polyethylen (PE-Xb) oder physikalisch vernetztes Polyethylen (PE-Xc), Polyethylen erhöhter Temperaturbeständigkeit (PE-RT), Polyvenylchlorid (PVC), Polypropylen (PP) bei entsprechenden Wandstärken, Polyphenylsulfon (PPSU), Polyetheretherketon (PEEK) oder Polyaryletherketon (PAEK). aliphatisches biobasiertes Polyamid (PA410, PA12, PA12-GF30) oder Polypropylen-Random-Copolymer mit modifizierter Kristallstruktur und erhöhter Temperaturbeständigkeit (PP-RCT).

Fittings zum Verbinden mit einem von außen abzudichtenden Rohr können verschiedene Ausgestaltungen aufweisen. In der Regel ist ein Dichtungsring, beispielsweise ein O-Ring, zum Abdichten des Fittings gegenüber der Rohraußenseite vorgesehen. Des Weiteren sind Halteelemente und/oder Fixierelemente vorgesehen, die vor und nach dem Verpressen das Rohr in der erforderlichen Position relativ zum Fitting fixieren.

Beispielsweise weist ein Fitting zum Verbinden mit einem von außen abzudichtenden Rohr einen Grundkörper einen Aufbau mit einem in dem Grundkörper umfangseitig ausgebildeten und nach innen vorstehenden Anschlagelement, mit einer mit dem Grundkörper verbundenen und eine Außenkontur bildenden Presshülse, wobei die Presshülse eine nach innen zum aufzunehmenden Rohr hin gerichtete Kammer aufweist, mit einem in der Kammer angeordneten Klemmring, wobei der Klemmring aus einem Kunststoff besteht und eine Mehrzahl von entgegen der Auszugsrichtung des einzuschiebenden Rohres ausgerichteten Klemmelementen aufweist, und mit einem in der Kammer angrenzend an das Anschlagelement angeordneten Dichtelement auf, wobei die Presshülse geeignet ist, zusammen mit dem Klemmring, den Klemmelementen und dem Dichtelement das zu verbindende starre Rohr von außen abzudichten.

Der Grundkörper des Klemmrings ist aus einem Kunststoff hergestellt und weist eine geschlossene Ringform auf. Um den Klemmring in ein Fitting bzw. in die hinterschnittene Kammer der Presshülse einzusetzen, muss dieser radial zusammengedrückt werden, wozu axial verlaufende Schlitze vorgesehen sind, die das Zusammendrücken ermöglichen.

Problematisch bei der zuvor beschriebenen Ausgestaltung der Fittings und der dabei verwendeten Klemmringe ist, dass zum einen für jeden Fitting ein spezifischer Klemmring hergestellt werden muss. Zum anderen ist das Herstellen der Klemmringe aufwändig, weil in der runden Form Halteelemente ausgebildet und/oder Fixierelemente integriert werden müssen und zahlreiche Schlitze eingebracht erden müssen, um die Verformbarkeit für die Installation zu gewährleisten. Außerdem ergibt sich durch die Anordnung von Schlitzen keine durchgehende Anlagefläche für den O-Ring, wodurch die Lebensdauer der Verbindung verkürzt sein kann.

Die US 4,119,335 A beschreibt eine Klemmringanordnung in Form eines länglichen Streifens mit mit Rändelungen versehenen Ringelementen, die durch Elastomerelemente miteinander verbunden sind.

Die EP 3 051 199 A1 beschreibt eine Klemmringanordnung in Ringform mit Ringelementen, die mittels Verbindungselementen miteinander verbunden sind.

Die EP 2 242 947 A1 beschreibt einen Klemmring mit Ringelementen, der in Streifenform oder als seitlich offener Ring vorliegen kann.

Die US 2016/053783A1 beschreibt eine Halteklammer in Form eines Bandes mit Ringelementen und Scharnierelementen und einem Verriegelungsmechanismus, mittels der die Verbindungsstellen von Rohrleitungen gesichert werden kann.

Die JP 2014 190366 A beschreibt ein Fitting zum Verbinden von Rohren mit einem Halteelement mit Ringelementen und Scharnierelementen aus unterschiedlichen Materialien.

Die US 2012/0061956 A1 beschreibt einen Klemmring mit Ringelementen und Scharnierelementen, wobei die Ringelemente lediglich eine seitliche offene Ringform annehmen können.

Daher liegt der vorliegenden Erfindung das technische Problem zugrunde, einen Klemmring und einen Fitting mit einem solchen Klemmring anzugeben, wobei die Herstellung des Klemmrings vereinfacht und dessen Einsatz flexibler ausgestaltet ist.

Das zuvor aufgeführte technische Problem wird erfindungsgemäß durch einen Klemmring für ein Fitting für ein von außen abzudichtendes Rohr gelöst mit einer Mehrzahl von Ringelementen und mit einer Mehrzahl von Scharnierelementen zum verschwenkbaren Verbinden von jeweils zwei Ringelementen, wobei die Ringelemente zum Halten und/oder Fixieren eines einzusteckenden Rohrs ausgebildet sind, wobei die Ringelemente mittels der Scharnierelemente eine Streifenform aufweisen, wobei die Ringelemente eine flache Form oder eine seitlich offene Ringform annehmen können, wobei die miteinander mittels der Scharnierelemente verbundenen Ringelemente aus der flachen Form in die Ringform gefaltet werden können, und wobei die Ringelemente in azimutaler Richtung Seitenflächen aufweisen, die zumindest abschnittsweise in radialer Richtung nach innen verjüngend zueinander ausgebildet sind .

Das oben aufgezeigte technische Problem wird erfindungsgemäß auch durch einen Fitting zum Verbinden mit einem von außen abzudichtenden Rohr gelöst mit einem Grundkörper, mit einem in dem Grundkörper umfangseitig ausgebildeten und nach innen vorstehenden Anschlagelement, mit einer mit dem Grundkörper verbundenen Presshülse, wobei die Presshülse eine nach innen zum aufzunehmenden Rohr hin gerichtete Kammer aufweist, mit einem in der Kammer angeordneten Klemmring, wobei der Klemmring aus einem Kunststoff besteht und eine Mehrzahl von entgegen der Auszugsrichtung des einzuschiebenden Rohres ausgerichteten Schneidelementen aufweist, und mit einem in der Kammer angrenzend an das Anschlagelement angeordneten Dichtelement, wobei die Presshülse geeignet ist, zusammen mit dem Klemmring, den Schneidelementen und dem Dichtelement das zu verbindende Rohr von außen abzudichten, wobei der Klemmring in einer der zuvor und nachfolgend beschriebenen Ausgestaltungen ausgebildet ist.

Der Klemmring wird in vorteilhafter Weise als Flachprodukt hergestellt, wobei die einzelnen Ringelemente mittels der Scharnierelemente beweglich miteinander verbunden sind. Die Ringelemente bilden somit einzelne Segmente des Pressrings. Der Begriff "Flachprodukt" bzw. "flach" bedeutet dabei, dass die Ringelemente durch die Scharnierelemente in eine langgestreckte, flache und streifenförmige Form gebracht werden können und die Ringelemente im Wesentlichen eben auf einer Fläche aufliegen können.

Die Scharnierelemente sind bevorzugt als Filmscharniere integral mit den Ringelementen ausgebildet, so dass der Klemmring in einer einstückigen Grundform vorliegt. Daher kann der Klemmring in bevorzugter Weise mit einem Kunststoff-Extrusionsverfahren als Endlosprofil hergestellt werden. Durch die Ausbildung als flacher streifenförmiger Klemmring wird weiterhin die Montage von zusätzlichen Elementen wie Schneidelementen erleichtert, die nach der Herstellung des Streifens leichter integriert werden können, als wenn der Klemmring in Ringform vorliegt.

Die miteinander mittels der Scharnierelemente verbundenen Ringelemente können aus einer flachen Form in eine Ringform gefaltet werden. Für einen Einbau in einem Fitting wird der Klemmring daher in einer vorgegebenen Länge abgeschnitten und dann in einer offenen Ringform, ähnlich einer C-Form, in das Fitting eingesetzt. Für den Einbau kann die Form des Klemmrings durch die besondere Ausgestaltung mit den Scharnierelementen und der damit verbundenen besonderen Elastizität leicht radial nach innen umgeformt werden. Gegebenenfalls können sich die freien Enden des Klemmrings beim Einbauen überlappen und beim Einfügen in die Kammer der Presshülse sich zur Ringform entfalten. Somit wird eine Montage insbesondere in Fittings mit kleinen Durchmessern erleichtert.

Beim radialen Verpressen des Fittings mittels eines Presswerkzeugs bilden die Scharnierelemente und die angrenzenden Bereiche der Ringelemente die Verformungszonen. Die Verformungszonen sind daher gleichmäßig und gegebenenfalls sogar symmetrisch in Umfangsrichtung verteilt angeordnet. Beim Pressvorgang sorgen dann die Verformungszonen für eine in azimutaler Richtung gleichmäßige Krafteinleitung und insbesondere wird ein tangentiales Verschieben der Ringelemente eingeschränkt oder gar ganz vermieden. Insbesondere bei der nachfolgend beschriebenen Ausgestaltung des Ringelements als Fixierelement mit Schneidelement ist es vorteilhaft, dass eine tangentiale Bewegung des Schneidelements eingeschränkt bzw. vermieden wird.

Zudem bewirken die zusammengedrückten Scharnierelemente mit den Ringelementen zusammen im verpressten Zustand eine durchgängige Dichtungsanlagefläche, wodurch die Positionierung und Sicherung des Dichtelements.

Die zuvor beschriebenen Ringelemente bestehen bevorzugt aus einem der nachfolgenden Materialien: vernetztes Polyethylen (PE-X), Silan-vernetztes Polyethylen (PE-Xb) oder physikalisch vernetztes Polyethylen (PE-Xc), Polypropylen (PP), Polyphenylsulfon (PPSU), Polyetheretherketon (PEEK) oder Polyaryletherketon (PAEK), aliphatisches biobasiertes Polyamid (PA410, PA12, PA12-GF30) oder Polypropylen-Random-Copolymer mit modifizierter Kristallstruktur und erhöhter Temperaturbeständigkeit (PP-RCT).

In bevorzugter Weise weisen die Ringelemente eine teilzylindrische Außenfläche auf. Somit passen sich die Ringelemente zumindest abschnittsweise außen an die zylindrische Form des Fittings im Bereich der Kammer der Presshülse an. In der flachen streifenförmigen Form können die Ringelemente daher mit einem Teilabschnitt ihrer teilzylindrischen Außenfläche auf einer ebenen Fläche aufliegen.

Des Weiteren weisen die Ringelemente in azimutaler Richtung Seitenflächen auf, die zumindest abschnittsweise in radialer Richtung nach innen verjüngend zueinander ausgebildet sind. Somit können die Ringelemente zusammen mit dem sie verbindenden Scharnierelement eine V-Nut zwischen sich ausbilden. Diese V-Nut ermöglicht eine leichtere kreisförmige Anordnung der Ringelemente. Zudem bietet ein zusätzlicher Raum zwischen den Ringelementen ein Volumen, das beim Verpressen durch Material der Ringelemente ausgefüllt werden kann. Dieses führt zu einem gleichmäßigen Verteilen der Presskraft, die dauerhaft von der Presshülse über den Klemmring auf die Außenseite des Rohres ausgeübt wird.

In weiter bevorzugter Weise weisen die Ringelemente eine vorgegebene azimutale Länge auf, so dass durch ein Auftrennen des Streifens an Scharnierelementen in Streifen mit mindestens zwei unterschiedlichen Anzahlen von Ringelementen für mindestens zwei Klemmringe für Fittings mit mindestens zwei unterschiedlichen Normweiten möglich ist. Somit ist ein variabler Nennweiteneinsatz des Klemmrings durch ein Trennen auf unterschiedliche Längen möglich. Da der Klemmring innerhalb des Fittings möglichst einen Vollkreis ausfüllen soll, um erstens eine durchgehende Anlagefläche für das Dichtelement und um zweitens einen festen Sitz des Klemmring vor dem Verpressen zu gewährleisten, um beispielsweise ein Herausfallen während des Transports zu verhindern.

Für die Mehrfachverwendung eines zuvor beschriebenen Klemmrings zu ermöglichen, wird Teilung des Klemmrings so gewählt, dass der volle Umfang bei zwei oder mehr Nennweiten erreicht werden kann.

Des Weiteren können die Ringelemente an dem einer einzusetzenden Dichtung zugewandten Ende einen Dichtungssitz aufweisen. Der Dichtungssitz wird vorzugsweise durch ein axial vorstehendes Halteelement realisiert, das den vom Ringelement aufgespannten Raum radial nach innen begrenzt und dadurch die Bewegungsfreiheit der Dichtung einschränkt. Das Ringelement kann aber auch abschnittsweise rund ausgebildet ein und allein durch eine axiale Anlage an der Dichtung die Bewegungsfreiheit der Dichtung einschränken.

Der Dichtungssitz verbessert einerseits den Dichtungsschutz, indem beim Verpressen des Fittings ein Herausdrücken der Dichtung in axialer Richtung eingeschränkt oder verhindert wird. Andererseits verhindert der Dichtungssitz ein Herausdrücken durch axial auftretende Kräfte beim Rohreinschub. Zudem wird die Position der Dichtung auch im unverpressten Zustand bei auftretenden Druckunterschieden gegen ein Verschieben gesichert, wenn durch Druckunterschiede die Dichtung in axialer Richtung angesaugt wird.

Die Ringelemente des Klemmrings können gleiche oder unterschiedliche Funktionen ausüben und daher unterschiedlich ausgestaltet sein. Die unterschiedlichen Funktionen können alternierend oder in anderer Weise abwechselnd durch die benachbart angeordneten Ringelemente realisiert sein.

Bei einer ersten bevorzugten Ausgestaltung sind die Ringelemente zumindest teilweise als Halteelemente ausgebildet und die Ringelemente weisen radial nach innen gerichtete. vorzugsweise elastisch ausgebildete, Führungselemente für ein Zentrieren und gegebenenfalls Halten eines einzuführenden Rohres auf. Somit dienen die Halteelemente zum einen beim Einführen des Rohres in einen Fitting und den darin angeordneten Klemmring für ein Zentrieren des Rohres und zum anderen nach dem Einführen und vor dem Verpressen des Fittings für ein Halten des Rohres mit definierten Montagekräften.

Das Zentrieren des Rohres beim Einführen in das Fitting wird zudem in bevorzugter Weise dadurch verbessert, dass in axialer Richtung hintereinander mindestens zwei radial verschieden weit nach innen vorstehende Führungselemente ausgebildet sind. Somit ergeben sich nacheinander während des Einschiebens des Rohres eine erste Zentrierung und eine zweite Zentrierung. Das erste vom Fitting aus betrachtet distale Führungselement kann weniger weit nach innen rein als das proximale Führungselement ragen, so dass insbesondere für schräg eingesetzte Rohre ein gute Führung hin zur richtigen Position für ein Verpressen erreicht wird. Darüber hinaus halten die verschiedenen Führungselemente das eingeschobene Rohr nach der Montage und vor dem Verpressen.

Die Ausbildung der Führungselemente führt zu definierten Montagekräften und daher auch zu einer verbesserten haptischen Kontrolle beim Einführen eines Rohre in das Fitting, insbesondere bei einer zweistufigen Ausbildung von zwei verschieden weit nach innen ragenden Führungselementen. Der Benutzer kann genauer haptisch kontrollieren, ob das Rohr richtig und weit genug eingeschoben worden ist.

Durch die Geometrie der Führungselemente mit definierter Materialstärke und Materialeigenschaften kann eine gleichbleibende Montage- und Rohrhaltekraft unabhängig der Toleranzen des Rohrs realisiert werden.

Die Führungselemente bewirken wegen der Zentrierungsfunktion, insbesondere zusammen mit dem oben beschriebenen Dichtungssitz zur genaueren Positionierung der Dichtung, dass während des Einschiebens des Rohres die äußere Oberfläche des Rohres mit der Innenseite der Dichtung nur in geringem Maße oder vorzugsweise gar nicht in Berührung kommt. Somit wird die Gefahr einer Beschädigung der Dichtung verringert und auch ohne Anwendung von gleitfördernden Mitteln wie Silikonöl können niedrige Einschubkräfte realisiert werden. Der Einsatz von Dichtungen ohne lackbenetzungsstörende Substanzen (LABS-frei) und ohne Silikon ist somit möglich.

Auch die Funktionalität einer im unverpressten Zustand gewollten undichten Anordnung aus Rohr und Dichtung wird durch die beschrieben Ausgestaltung verbessert, da das Positionieren und Halten des Rohrs relativ zur Dichtung verbessert wird. Weist beispielsweise die Dichtung einen ausreichend größeren Innendurchmesser als der Außendurchmesser des Rohres auf, dann kann eine gewollte Undichtigkeit im unverpressten Zustand erreicht und sichergestellt werden.

Alternativ zu den Halteelementen können die Ringelemente auch zumindest teilweise als Fixierelemente ausgebildet sein, wobei die Fixierelemente jeweils mindestens ein Schneidelement zum Fixieren eines einzuschiebenden Rohres aufweisen. Nach dem Einschieben und nach dem Verpressen des Fittings wird das Rohr durch die Fixierelemente vor einem Herausziehen des Rohres aus dem Fitting gesichert.

In bevorzugter Weise liegen die Schneidelemente innen am Rohr entlang eines linienförmigen Bereichs, insbesondere einer Schneide, und außen an der Kammer der Presshülse entlang eines flächigen Bereichs an. Dadurch kann beim Verpressen des Fittings die radial nach innen gerichtete Kraft effektiv zum Einschneiden des Schneidelements in die Wandung des Rohrs umgesetzt werden.

Bei einer bevorzugten Ausgestaltung des Klemmrings weisen die Fixierelemente in Umfangsrichtung neben den Schneidelementen angeordnete Schutzelemente auf, wobei die Schutzelemente in radialer Richtung weiter als die Schneidelemente nach innen ragen. Dadurch wird das Rohr beim Einschieben und vor dem Verpressen vor einem Kontakt mit den Schneidelementen geschützt und eine Beschädigung der Oberfläche des Rohres an ungewollten Stellen wird dadurch weitgehend vermieden. Die Schutzelemente wirken also ähnlich wie die oben beschriebenen Führungselemente

In besonders bevorzugter Weise ist der Klemmring sowohl mit Halteelementen als auch mit Fixierelementen ausgebildet, so dass ein Teil der Ringelemente als Halteelemente und ein Teil der Ringelemente als Fixierelemente ausgebildet sind. Vorzugsweise sind die Halteelemente und die Fixierelemente umfangseitig gleich verteilt angeordnet, um eine möglichst symmetrische Anordnung zu erreichen.

Zudem ist es bevorzugt, die Anzahl der Halteelemente größer oder gleich der Anzahl der Fixierelemente ist, insbesondere ist das Verhältnis von Halteelementen zu Fixierelementen 1:1 oder 2:1. Auch eine größere Anzahl an Fixierelementen ist möglich, wobei nur 3-5 Halteelemente und ansonsten nur Fixierelemente vorgesehen sind.

Die zuvor beschriebenen Führungselemente der Halteelemente und die Schutzelemente der Fixierelemente können zur Fixierung zusätzlich zu den Schneidelementen beitragen, indem diese beim Verpressen ebenfalls in die Rohrwandung eindringen. Somit kann die Anzahl der Fixierelemente gegenüber der Anzahl der Haltelemente geringer sein.

Im Folgenden wird die Erfindung anhand von Ausführungsbeispielen mit Bezug auf die Zeichnung erläutert. In der Zeichnung zeigen
- Fig. 1 - 4: ein erstes Ausführungsbeispiel eines erfindungsgemäßen Klemmrings,
- Fig. 5 - 8: ein zweites Ausführungsbeispiel eines erfindungsgemäßen Klemmrings und
- Fig. 9a - 9c: ein Ausführungsbeispiel eines Fittings mit eingesetztem Klemmring ohne und mit eingeführtem Rohr,
- Fig. 10a - 10b: eine schematische Darstellung eines Fittings mit einem erfindungsgemäßen Fitting vor und nach einem radialen Verpressen.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

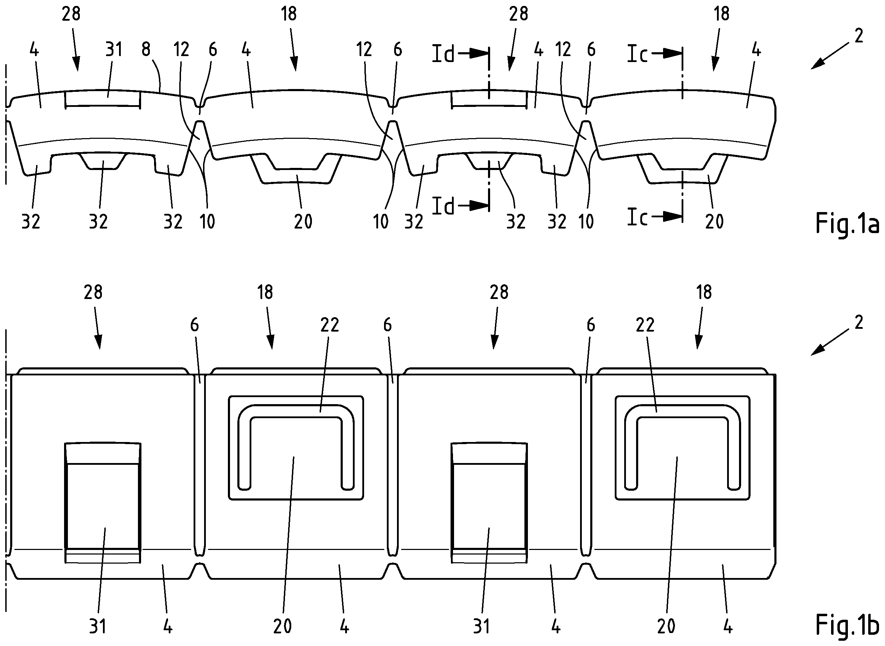

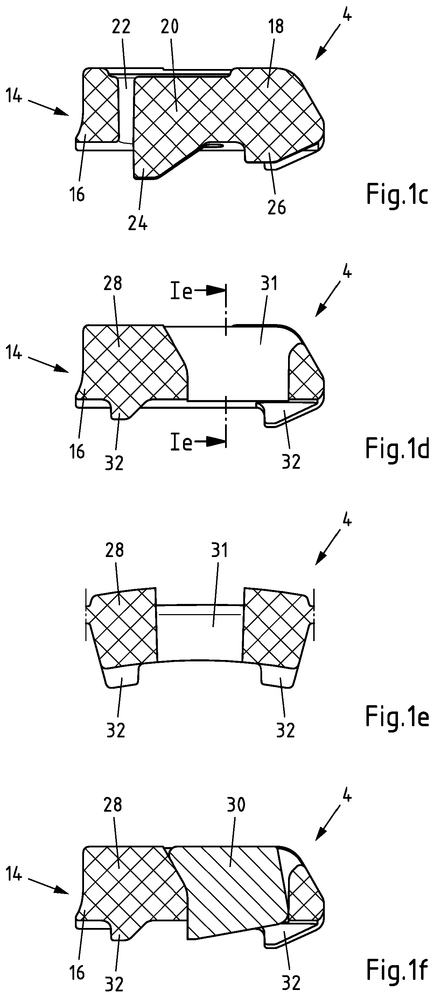

Die Fig. 1 bis 4 zeigen ein erstes Ausführungsbeispiel eines Klemmrings 2 in verschiedenen Ansichten und Positionen.

Der Klemmring 2 ist geeignet für ein Fitting für ein von außen abzudichtendes Rohr, das weiter unten beschrieben wird. Der Klemmring 2 weist eine Mehrzahl von Ringelementen 4 auf, die jeweils mit Scharnierelementen 6 verschwenkbar miteinander verbunden sind. Die Ringelemente 4 dienen einem Halten und/oder einem Fixieren eines einzusteckenden Rohrs.

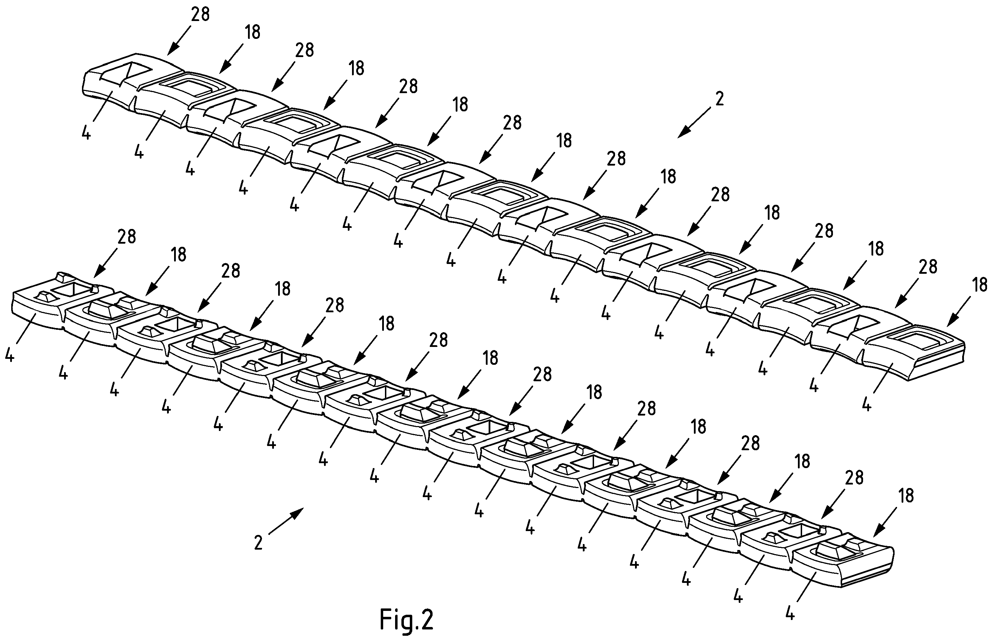

Weiterhin weisen die Ringelemente 4 mittels der Scharnierelemente 6 eine Streifenform auf, wie sich insbesondere aus den Fig. 1a und 2 ergibt. Die Ringelemente 4 können daher zum einen eine flache Form wie in Fig. 1a und 2 annehmen, wobei "flach" im Wesentlichen bedeutet, dass die Ringelemente 4 auf einer Fläche aufliegen können.

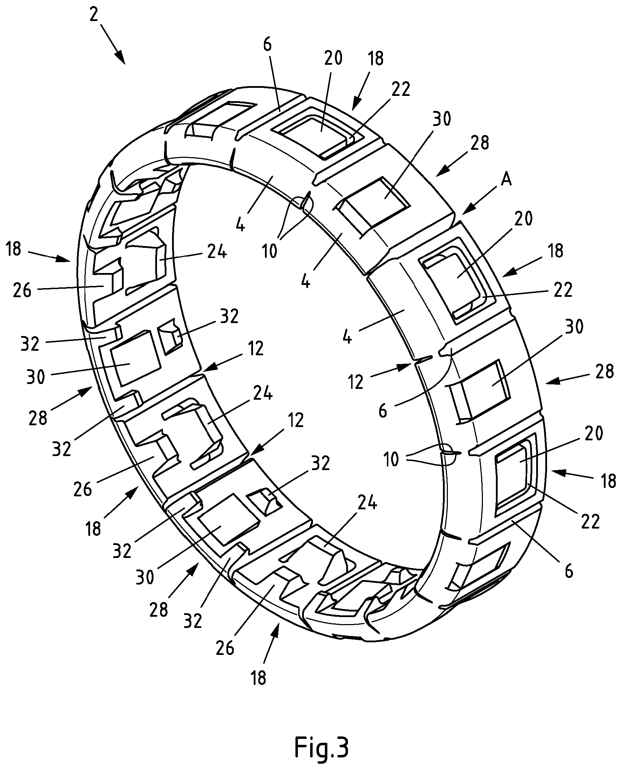

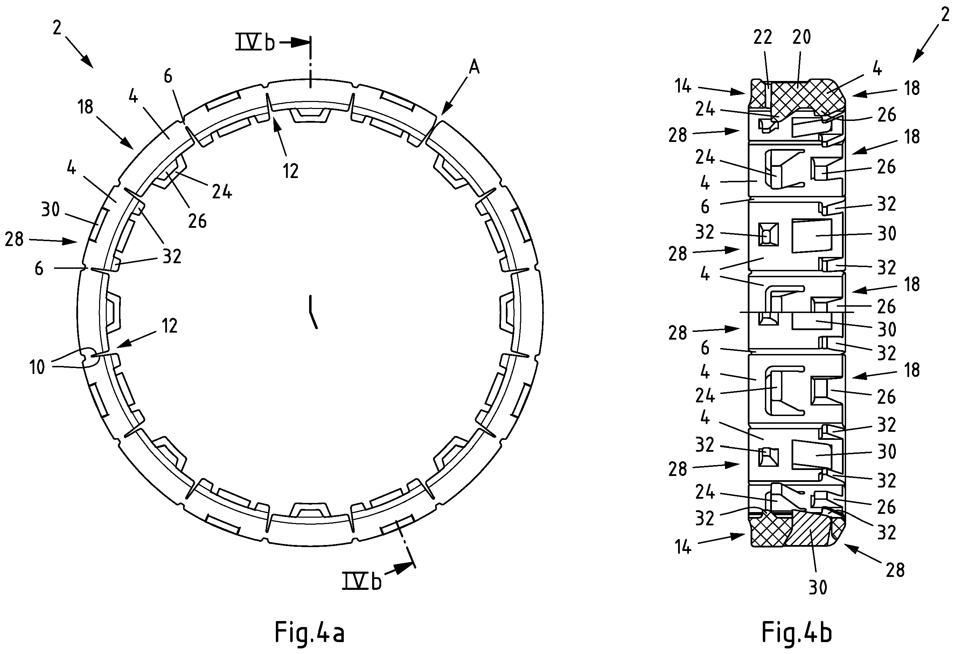

Zum anderen können die Ringelemente 4 mittels der Scharnierelemente 6 auch eine seitlich offene Ringform wie in Fig. 3, 4a und 4b annehmen. Der Klemmring 2 weist in der Ringform eine einseitig offene C-Form auf.

Während der Herstellung des Klemmrings 2 als Endlosprodukt, beispielsweise als Produkt eines Kunststoffextrusionsverfahrens, hat die flache Anordnung den Vorteil, dass die Ringelemente 4 in einfacher Weise mit weiteren Elementen bestückt werden können, ohne dass eine Ringform zu aufwändigen Verfahrensschritten führt.

Wie sich aus den Fig. 1 bis 4 ergibt, weisen die Ringelemente 4 eine teilzylindrische Außenfläche 8 auf, die an die zylindrische Formen des Fittings bzw. der Kammer der zugeordneten Presshülse angepasst ist. Dadurch kann der Klemmring zumindest abschnittsweise flächig am Fitting anliegen. In der flachen Form des Klemmrings 2 liegen die teilzylindrischen Außenflächen dann abschnittsweise auf einem Untergrund auf.

Weiterhin weisen die Ringelemente 4 in azimutaler Richtung Seitenflächen 10 auf, die zumindest abschnittsweise in radialer Richtung nach innen verjüngend zueinander ausgebildet sind. Dadurch bilden sich zusammen mit dem Scharnierelement 6 V-Nuten 12 zwischen den Ringelementen 4 aus. In Fig. 1a sind die V-Nuten 12 in langgestreckten flachen Form des Klemmrings 2 relativ breit zu erkennen, während in Fig. 4a, die V-Nuten 12 in der gebogenen Ringform des Klemmrings 2 schmaler, aber immer noch vorhanden sind.

Die Ringelemente 4 weisen weiterhin eine vorgegebene azimutale Länge auf, so dass durch ein Auftrennen des Streifens an Scharnierelementen 6 in Streifen mit mindestens zwei unterschiedlichen Anzahlen von Ringelementen 4 für mindestens zwei Klemmringe 2 für Fittings mit mindestens zwei unterschiedlichen Normweiten möglich ist. Somit können aus dem endlos hergestellten Strang unterschiedlich lange Teilstücke als Klemmring 2 abgetrennt werden, die dann in gebogener Form jeweils für Fittings mit unterschiedliche Nennweiten geeignet sind. Diese Eigenschaft ist insbesondere im Hinblick auf die Effektivität der Herstellung vorteilhaft.

Als ein mögliches Beispiel werden die folgenden Werte angegebene:
Nennweite NW28: Innendurchmesser D=35mm und Umfang=109,96 mm (gleich Länge des Klemmrings)
Nennweite NW35: Innendurchmesser D=42mm und Umfang= 131,95 mm (gleich Länge des Klemmrings)
Daraus folgt bei einer Länge eines Ringelements von 11 mm, dass bei der Nennweite NW28 10 Elemente = 110 mm und bei der Nennweite NW35: 12 Elemente =132 mm eingesetzt werden können.

Die Ringelemente 4 weisen weiterhin an dem einer einzusetzenden Dichtung zugewandten Ende einen Dichtungssitz 14 auf, der durch ein axial vorstehendes Halteelement 16 ausgebildet ist. Der Dichtungssitz 14 sichert die Position der Dichtung innerhalb eines Fittings sowohl vor als auch nach dem Verpressen des Fittings.

Wie sich bereits unmittelbar aus Fig. 1a ergibt, sind die Ringelemente 4 unterschiedlich ausgebildet.

Zum einen sind die Ringelemente 4 teilweise als Halteelemente 18 ausgebildet und weisen radial nach innen gerichtete elastische Führungselemente 20 für ein Zentrieren und gegebenenfalls Halten eines einzuführenden Rohres auf. Die Führungselemente 20 sind so ausgebildet, dass definierte Montagekräfte und eine verbesserte Rohrhaltefunktion erreicht werden.

Die Führungselemente 20 sind gemäß Fig. 1a und 1b durch eine an drei Seiten verlaufende Freistellung 22 aus dem Material des Halteelementes 18 herausgearbeitet und sind somit elastisch federnd ausgestaltet. Radial nach innen gerichtet weisen die Führungselemente 20 vorstehende Keile 24 auf, die an dem einzuführenden Rohr anliegen und dieses führen, wie in Fig. 1c zu erkennen ist.

In axialer Richtung versetzt zu dem Führungselement 20 sind weniger weit nach radial innen vorstehende Führungselemente 26 ausgebildet. Somit erfolgt beim Einführen eines Rohres (in Fig. 1c von rechts kommend) eine erste Zentrierung durch das Führungselement 26 und eine zweite Zentrierung durch das Führungselement 20 mit dem Keil 24 bzw. den Keilen 24. Insbesondere schräg angesetzte Rohre werden durch diese unterschiedlich stark ausgeprägten Führungen zentriert und optimal im Fitting angeordnet. Das distale Führungselement 26 ragt somit weniger weit nach innen als das proximale Führungselement 20 aus Sicht des Fittings. Im vollständig eingeschobenen Zustand des Rohres halten die Führungselemente 20 und 26 das eingeschobene Rohr.

Alternativ zu den Halteelementen 18 ist ein weiterer Teil der Ringelemente 4 als Fixierelemente 28 ausgebildet und weisen jeweils mindestens ein Schneidelement 30 zum Fixieren eines einzuschiebenden Rohres auf, wie in Fig. 1f dargestellt ist. Dazu weist das Fixierelement 28 eine in den Fig. 1a, 1b, 1d und 1e gezeigte Ausnehmung 31 auf, in die das Schneidelement 30 eingesetzt wird. In den Fig. 1a, 1b, 1d und 1e ist das Fixierelement 28 ohne Schneidelement 30 und in Fig. 1f mit Schneidelement 30 gezeigt. Das Schneidelement 30 besteht dabei bevorzugt aus einem Metall und fixiert ein eingeschobenes Rohres nach dem Verpressen vor einem Herausziehen des Rohres aus dem Fitting.

Die dargestellten Fixierelemente 28 weisen weiterhin in Umfangsrichtung neben dem Schneidelement 30 angeordnete Schutzelemente 32 auf, die in radialer Richtung weiter als die Schneidelemente 30 nach innen ragen. Dadurch bilden die Schutzelemente 32 einen Schutz des Rohres beim Einschieben und vor dem Verpressen durch eine unbeabsichtigte Beschädigung der Oberfläche.

Wie sich aus Fig. 1a und1b sowie 2 bis 4a und 4b ergibt, sind ein Teil der Ringelemente 4 als Halteelemente 18 und ein Teil der Ringelemente 4 als Fixierelemente 28 ausgebildet. Dabei wechseln sich die Halteelemente 18 und die Fixierelemente 28 einander ab, so dass diese umfangseitig gleich verteilt angeordnet sind. Bei diesem Ausführungsbeispiel ist die die Anzahl der Halteelemente 18 gleich der Anzahl der Fixierelemente 28.

Wie in den Fig. 3 und 4a dargestellt ist, wird der Streifen des Klemmrings 2 zu einem runden Klemmring 2 gebogen, wobei dessen Seitenenden an der mit dem Pfeil A gekennzeichneten Stelle eine offene Stelle bilden.

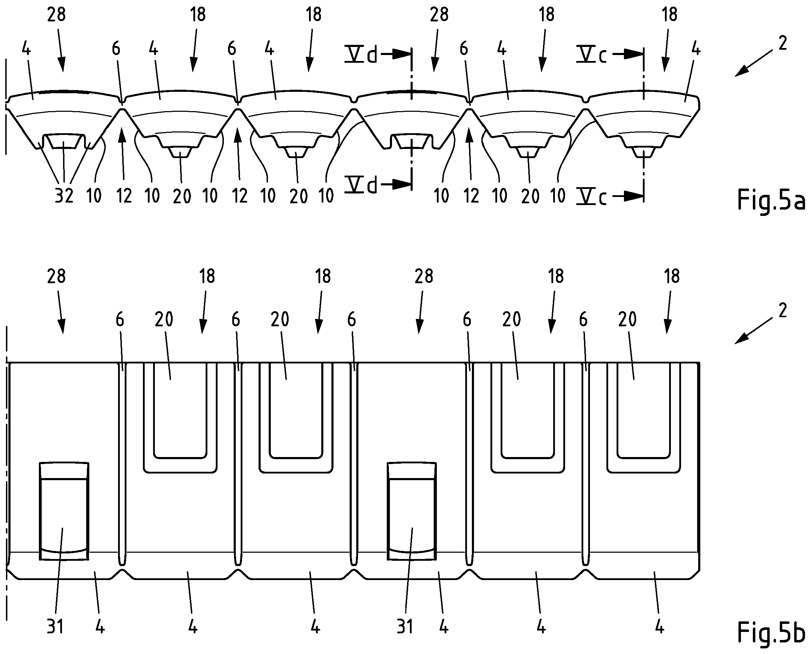

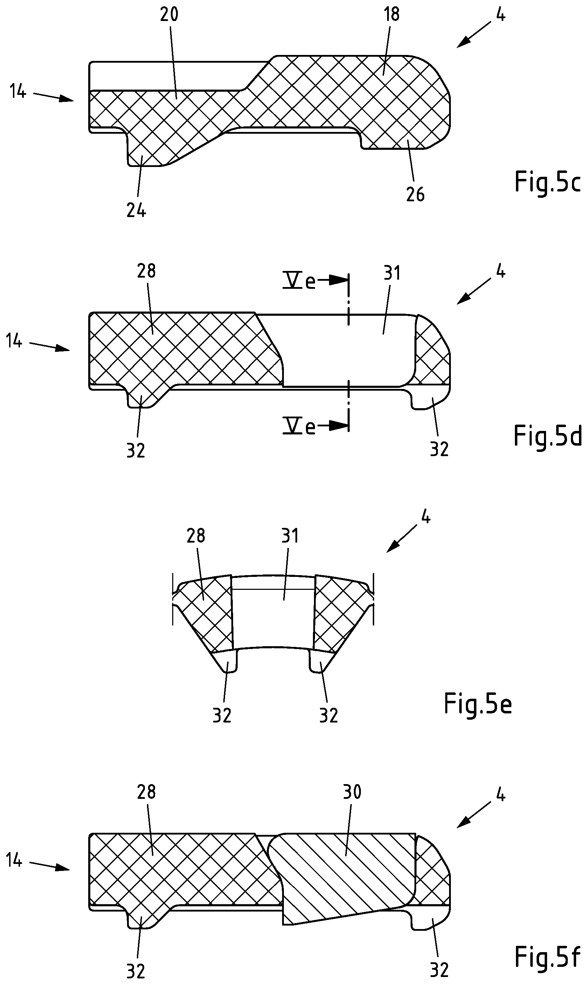

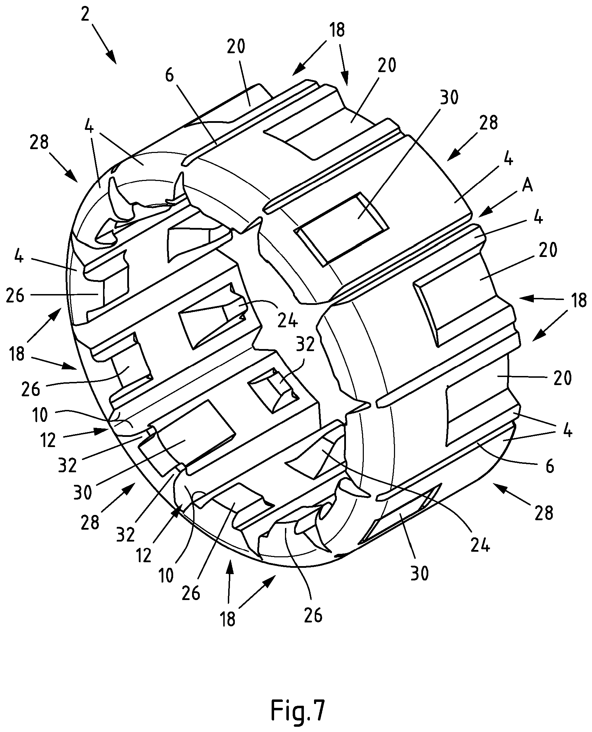

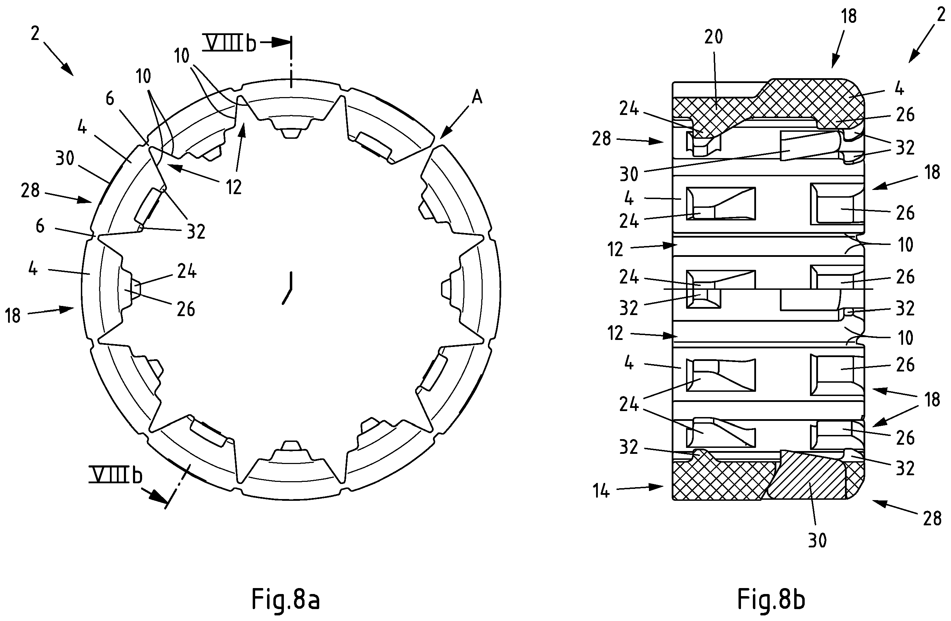

In den Fig. 5a bis 5f sowie 6 bis 8a und 8b ist ein zweites Ausführungsbeispiel dargestellt, das im Gegensatz zum ersten Ausführungsbeispiel für kleinere Nennweiten der zu verbindenden Rohre ausgebildet ist. Daher sind die einzelnen Ringelemente 4 kleiner dimensioniert, weisen aber gleiche oder identische Funktionalitäten auf.

Daher werden im Folgenden nur die Unterschiede erläutert und ansonsten auf die Beschreibung des ersten Ausführungsbeispiels verwiesen.

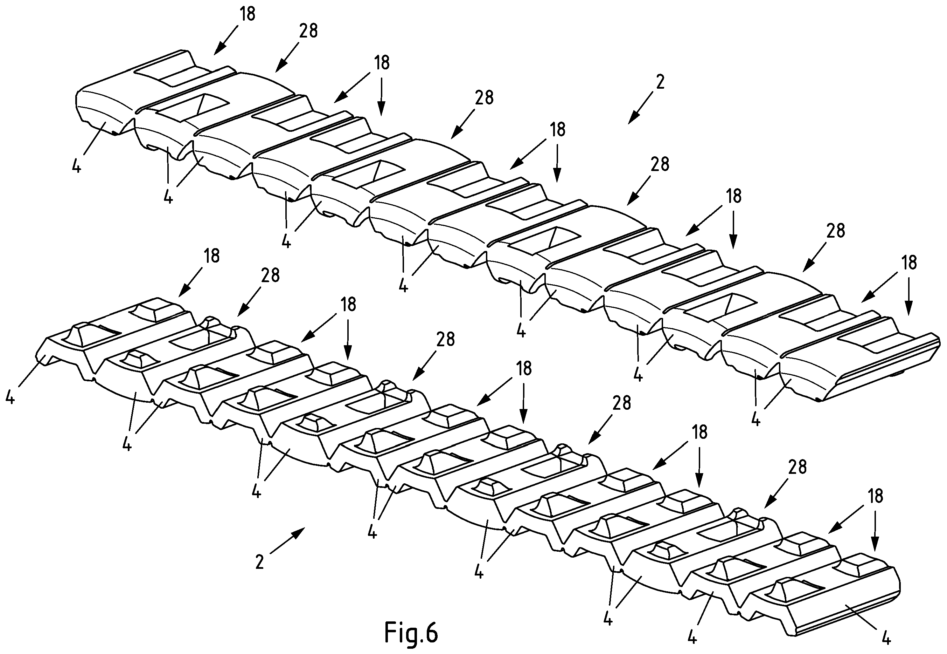

In Fig. 6 ist der flache Klemmring 2 gezeigt, bei dem doppelt so viele Halteelemente 18 wie Fixierelemente 28 vorhanden sind. Somit ist die Abfolge zwei Halteelemente 18 und ein Fixierelement 28. Diese Ausgestaltung hat sich bei kleineren Nennweiten als vorteilhaft herausgestellt, da weniger Auszugskräfte durch die Fixierelemente 28 ausgeglichen werden müssen, als es beim ersten Ausführungsbeispiel für größere Nennweiten der Fall ist.

Wie sich weiterhin aus den Fig. 5b und 5c ergibt, ist das Führungselement 20 nicht freigestellt, sondern die Elastizität des Führungselements 20 wird durch eine Materialverringerung durch eine Ausnehmung 25 eingestellt und gewährleistet.

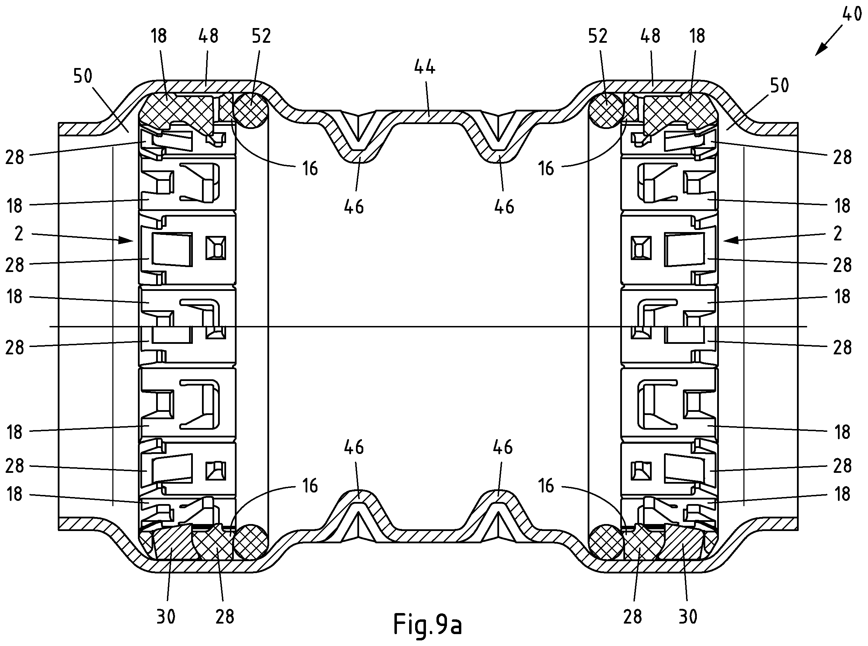

Die Fig. 9a bis 9c zeigen ein Ausführungsbeispiel eines Fittings 40 zum Verbinden mit einem von außen abzudichtenden Rohr 42. Der Fitting 40 weist einen Grundkörper 44 und ein in dem Grundkörper 44 umfangseitig ausgebildeten und nach innen vorstehenden Anschlagelement 46. Des Weiteren ist eine mit dem Grundkörper 44 verbundenen bildenden Presshülse 48 vorgesehen, wobei die Presshülse 48 eine nach innen zum aufzunehmenden Rohr 42 hin gerichtete Kammer 50 aufweist.

In der Kammer 50 ist der in den Fig. 1 bis 4 dargestellte Klemmring 2 angeordnet. Wie beschrieben besteht der Klemmring 2 aus einem Kunststoff und weist eine Mehrzahl von entgegen der Auszugsrichtung des einzuschiebenden Rohres 42 ausgerichteten Schneidelementen 30 auf. In der Kammer 50 ist angrenzend an das Anschlagelement 46 ein Dichtelement 52 angeordnet, das vorliegend als O-Ring ausgebildet ist.

Die Presshülse 48 ist geeignet, zusammen mit dem Klemmring 2, den Schneidelementen 30 und dem Dichtelement 52 das zu verbindende Rohr 42 von außen abzudichten und zu fixieren.

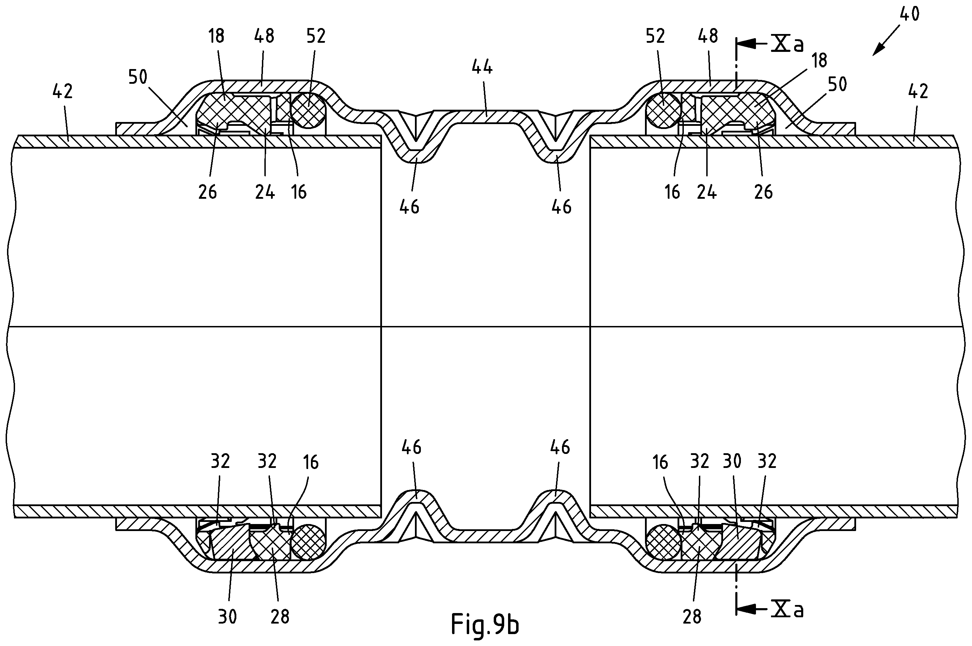

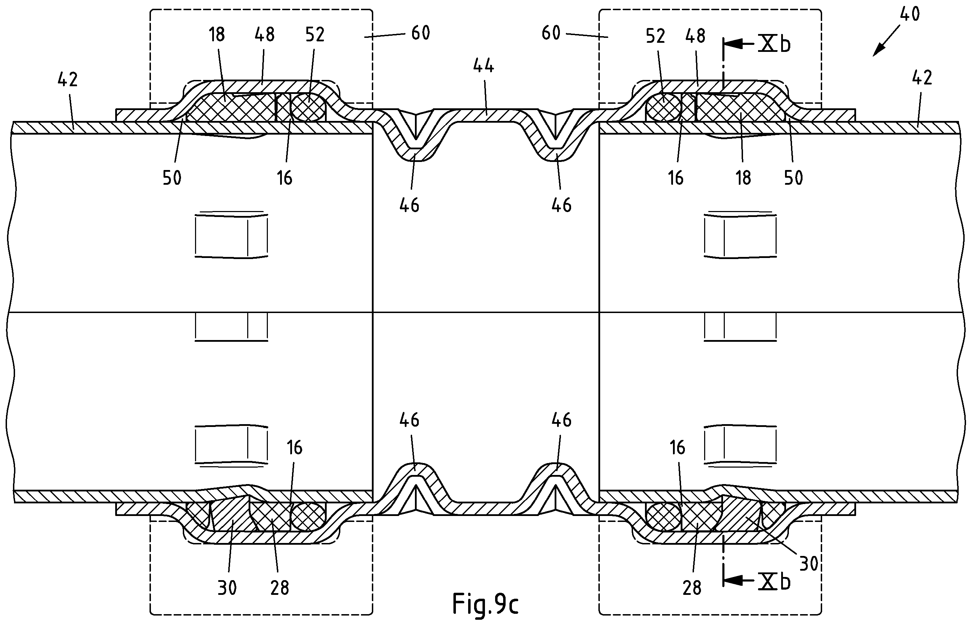

Fig. 9a zeigt den Fitting 40 in einem Querschnitt, der durch die oben und unten in der Kammer 50 angeordneten Halteelemente 18 verläuft. Im Querschnitt oben ist ein Halteelement 18 und im Querschnitt unten ist ein Fixierelement 28 gezeigt. Fig. 9b zeigt den Fitting 40 mit eingeschobenem Rohr 42 im unverpressten Zustand. Nach Fig. 9b ergibt sich wie oben erläutert worden ist, dass die Führungselemente 20, 24 und 26 des Halteelements 18 (oben dargestellt) das Rohr 42 während des Einführens und vor dem Verpressen halten und zentrieren. Fig. 9c zeigt dann den Fitting 40 im verpressten Zustand, der durch das Presswerkzeug 60 erzeugt wird, wobei die Führungselemente 20, 24 und 26 eng an dem Oberfläche des Rohres 42 anliegen und damit zur Fixierung und zum Halten des Rohres 42 beitragen.

Die Funktionalität des Fixierelements 28 wird in den Fig. 9a bis 9c im Querschnitt unten dargestellt. Einerseits bieten die Schutzelemente 32 einen Schutz der Oberfläche des Rohres 42 vor einer Beschädigung durch die Schneidelemente 30 beim Einschieben und im unverpressten Zustand, wie Fig. 9b zeigt. Andererseits sind die integrierten Schneidelemente 30 nach dem Verpressen gemäß Fig. 9c in das Material des Rohres 42 eingedrungen sind und fixieren das Rohr 42 im Fitting 40.

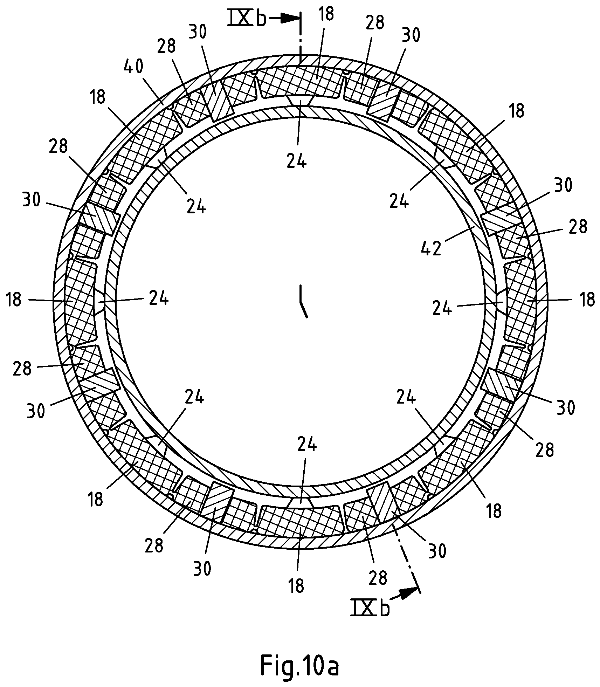

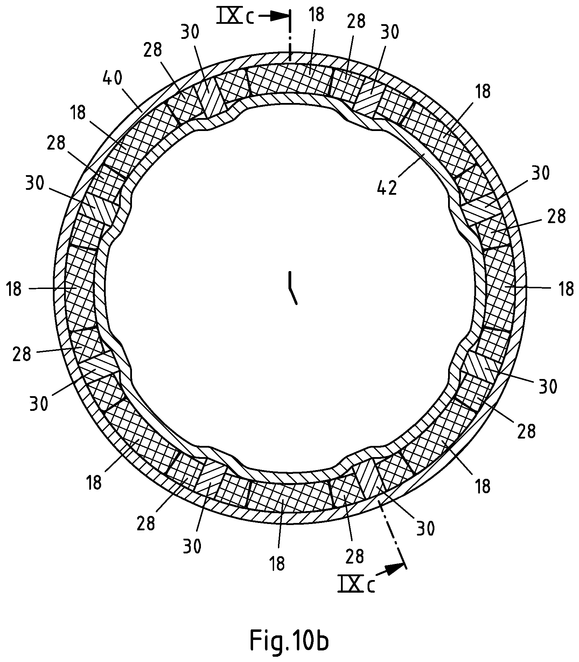

Die Fig. 10a und 10b zeigen jeweils einen Querschnitt des Fittings 40 im Bereich der Presshülse 48 mit Kammer 50. Im unverpressten Zustand nach Fig. 10a ist der Klemmring 2 innerhalb der Kammer 50 angeordnet und die Ringelemente 4 in Form sich abwechselnden Halteelemente 18 und Fixierelemente 28 liegen an der Innenseite der Kammer 50 an. Die Führungselemente 20 liegen an der Außenseite des Rohres 42 an, während die Schneidelemente 30 beabstandet vom Rohr angeordnet sind. Dieser Abstand wird durch die oben beschriebenen, in diesem Querschnitt nicht gezeigten Schutzelemente 32 sowie auch durch die Führungselemente 20 der benachbarten Haltelemente 18 hervorgerufen und sichergestellt.

Fig. 10b zeigt den verpressten Zustand, in dem durch ein hier nicht dargestelltes Presswerkzeug 60, siehe Fig. 9c mit gestrichelten Linien, die Presshülse 48 radial nach innen umgeformt worden ist. Die Durchmesserverringerung führt einerseits zu einer Verringerung des Abstands zwischen den Halteelementen 18 und den Fixierelementen 28, diese liegen nun aneinander an, und anderseits zu einem Eindringen der Schneidelemente 30 in die dadurch radial nach innen verformte Wandung des doppelschichtigen Rohres 42. Dadurch wird das Rohr 42 innerhalb des Fittings 40 fixiert und gegen ein Herausziehen oder Herausschieben und gegen ein axiales Verdrehen gesichert.

## Patentansprüche

1. Klemmring für ein Fitting für ein von außen abzudichtendes Rohr,
- mit einer Mehrzahl von Ringelementen (4),
- mit einer Mehrzahl von Scharnierelementen (6) zum verschwenkbaren Verbinden von jeweils zwei Ringelementen (4),
- wobei die Ringelemente (4) zum Halten und/oder Fixieren eines einzusteckenden Rohrs ausgebildet sind,
- wobei die Ringelemente (4) mittels der Scharnierelemente (6) eine Streifenform aufweisen,
- wobei die Ringelemente (4) eine flache Form oder eine seitlich offene Ringform annehmen können, wobei die miteinander mittels der Scharnierelemente (6) verbundenen Ringelemente (4) aus der flachen Form in die Ringform gefaltet werden können, und
- wobei die Ringelemente (4) in azimutaler Richtung Seitenflächen (10) aufweisen, die zumindest abschnittsweise in radialer Richtung nach innen verjüngend zueinander ausgebildet sind.

2. Klemmring nach Anspruch 1,
**dadurch gekennzeichnet,**
**dass** die Ringelemente (4) eine teilzylindrische Außenfläche (8) aufweisen.

3. Klemmring nach Anspruch 1 oder 2,
**dadurch gekennzeichnet,**
**dass** die Ringelemente (4) eine vorgegebene azimutale Länge aufweisen, so dass durch ein Auftrennen des Streifens an Scharnierelementen (6) in Streifen mit mindestens zwei unterschiedlichen Anzahlen von Ringelementen (4) für mindestens zwei Klemmringe für Fittings mit mindestens zwei unterschiedlichen Normweiten möglich ist.

4. Klemmring nach einem der Ansprüche 1 bis 3,
**dadurch gekennzeichnet,**
**dass** die Ringelemente (4) an dem einer einzusetzenden Dichtung zugewandten Ende einen Dichtungssitz (14) aufweisen.

5. Klemmring nach einem der Ansprüche 1 bis 4,
**dadurch gekennzeichnet,**
- **dass** die Ringelemente (4) zumindest teilweise als Halteelemente (18) ausgebildet sind und
- **dass** die Halteelemente (18) radial nach innen gerichtete, vorzugsweise elastisch ausgebildete, Führungselemente (20, 24, 26) für ein Zentrieren und gegebenenfalls Halten eines einzuführenden Rohres aufweisen.

6. Klemmring nach Anspruch 5,
**dadurch gekennzeichnet,**
**dass** in axialer Richtung hintereinander mindestens zwei radial verschieden weit nach innen vorstehende Führungselemente (20, 24, 26) ausgebildet sind.

7. Klemmring nach einem der Ansprüche 1 bis 6,
**dadurch gekennzeichnet,**
- **dass** die Ringelemente (4) zumindest teilweise als Fixierelemente (28) ausgebildet sind und
- **dass** die Fixierelemente (28) jeweils mindestens ein Schneidelement (30) zum Fixieren eines einzuschiebenden Rohres aufweisen.

8. Klemmring nach Anspruch 7,
**dadurch gekennzeichnet,**
**dass** die Fixierelemente (28) in Umfangsrichtung neben den Schneidelementen (30) angeordnete Schutzelemente (32) aufweisen, wobei die Schutzelemente (32) in radialer Richtung weiter als die Schneidelemente (30) nach innen ragen.

9. Klemmring nach einem der Ansprüche 1 bis 8,
**dadurch gekennzeichnet,**
**dass** ein Teil der Ringelemente (4) als Halteelemente (18) und ein Teil der Ringelemente (4) als Fixierelemente (28) ausgebildet sind.

10. Fitting zum Verbinden mit einem von außen abzudichtenden Rohr (42),
- mit einem Grundkörper (44),
- mit einem in dem Grundkörper (44) umfangseitig ausgebildeten und nach innen vorstehenden Anschlagelement (46),
- mit einer mit dem Grundkörper (44) verbundenen Presshülse (48), wobei die Presshülse (48) eine nach innen zum aufzunehmenden Rohr (42) hin gerichtete Kammer (50) aufweist,
- mit einem in der Kammer (50) angeordneten Klemmring (2), wobei der Klemmring (2) aus einem Kunststoff besteht und eine Mehrzahl von entgegen der Auszugsrichtung des einzuschiebenden Rohres (42) ausgerichteten Schneidelementen (30) aufweist, und
- mit einem in der Kammer (50) angrenzend an das Anschlagelement (46) angeordneten Dichtelement (52),
- wobei die Presshülse (48) geeignet ist, zusammen mit dem Klemmring (2), den Schneidelementen (30) und dem Dichtelement (52) das zu verbindende Rohr (42) von außen abzudichten,
**dadurch gekennzeichnet,**
- **dass** der Klemmring (2) nach einem der Ansprüche 1 bis 9 ausgebildet ist.

## Claims

1. Clamping ring for a fitting for a pipe to be sealed from the outside,
- with a plurality of ring elements (4),
- with a plurality of hinge elements (6) for pivotably connecting two ring elements (4) in each case,
- wherein the ring elements (4) are designed to hold and/or fix a pipe to be inserted,
- wherein the ring elements (4) have a strip shape by means of the hinge elements (6),
- wherein the ring elements (4) can have a flat shape or a laterally open ring shape, wherein the ring elements (4) connected to each other by means of the hinge elements (6) can be folded from the flat shape into the ring shape, and
- wherein the ring elements (4) have lateral surfaces (10) in the azimuthal direction, which are designed to taper inwards towards each other at least in sections in the radial direction.

2. Clamping ring according to claim 1,
**characterised in that**
the ring elements (4) have a part-cylindrical outer surface (8).

3. Clamping ring according to claim 1 or 2,
**characterised in that**,
the ring elements (4) have a predetermined azimuthal length, so that, by cutting the strip at hinge elements (6) into strips with at least two different numbers of ring elements (4), at least two clamping rings for fittings with at least two different nominal widths are possible.

4. Clamping ring according to one of claims 1 to 3,
**characterised in that**,
the ring elements (4) have a seal seat (14) at the end facing a seal to be inserted.

5. Clamping ring according to one of claims 1 to 4,
**characterised in that**,
- the ring elements (4) are at least partially designed as retaining elements (18), and
- that the retaining elements (18) have radially inwardly directed, preferably elastically designed guiding elements (20, 24, 26) for centring and, if necessary, holding a pipe to be inserted.

6. Clamping ring according to claim 5,
**characterised in that**,
at least two guiding elements (20, 24, 26) projecting radially inwards to different extents are formed one behind the other in the axial direction.

7. Clamping ring according to one of claims 1 to 6,
**characterised in that**,
- the ring elements (4) are at least partially designed as fixing elements (28), and
- that the fixing elements (28) each have at least one cutting element (30) for fixing a pipe to be inserted.

8. Clamping ring according to claim 7,
**characterised in that**,
the fixing elements (28) have protective elements (32) arranged next to the cutting elements (30) in the circumferential direction, the protective elements (32) projecting further inwards in the radial direction than the cutting elements (30).

9. Clamping ring according to one of claims 1 to 8,
**characterised in**
**that** some of the ring elements (4) are designed as retaining elements (18) and some of the ring elements (4) are designed as fixing elements (28).

10. Fitting for connecting to a pipe (42) to be sealed from the outside,
- with a base body (44),
- with a stop element (46) formed circumferentially in the base body (44) and projecting inwards,
- with a press sleeve (48) connected to the base body (44), wherein the press sleeve (48) has a chamber (50) directed inwards towards the pipe (42) to be received,
- with a clamping ring (2) arranged in the chamber (50), wherein the clamping ring (2) consists of a plastic and has a plurality of cutting elements (30) aligned counter to the direction in which the pipe (42) to be inserted is pulled out, and
- with a sealing element (52) arranged in the chamber (50) adjacent to the stop element (46),
- wherein the press sleeve (48) is suitable, together with the clamping ring (2), the cutting elements (30) and the sealing element (52), for sealing the pipe (42) to be connected from the outside,
**characterised in that**
- the clamping ring (2) is designed according to one of claims 1 to 9.

## Revendications

1. Bague de serrage pour un raccord pour un tube destiné à être étanchéifié depuis l'extérieur,
- avec une pluralité d'éléments de bague (4),
- avec une pluralité d'éléments charnière (6) pour le raccordement pivotant de respectivement deux éléments de bague (4),
- dans laquelle les éléments de bague (4) sont conçus pour le maintien et/ou la fixation d'un tube destiné à être emmanché,
- dans laquelle les éléments de bague (4) présentent une forme de bande au moyen des éléments charnière (6),
- dans laquelle les éléments de bague (4) peuvent adopter une forme plate ou une forme de bague ouverte latéralement, dans laquelle les éléments de bague (4) raccordés les uns aux autres au moyen des éléments charnière (6) peuvent être pliés de la forme plate vers la forme de bague, et
- dans laquelle les éléments de bague (4) présentent dans la direction azimutale des surfaces latérales (10) qui sont conçues pour s'effiler vers l'intérieur les unes vers les autres au moins par sections dans la direction radiale.

2. Bague de serrage selon la revendication 1,
**caractérisée**
**en ce que** les éléments de bague (4) présentent une surface externe (8) partiellement cylindrique.

3. Bague de serrage selon la revendication 1 ou 2,
**caractérisée**
**en ce que** les éléments de bague (4) présentent une longueur azimutale prédéfinie de telle sorte qu'une séparation de la bande d'éléments charnière (6) en bandes avec au moins deux nombres différents d'éléments de bague (4) pour au moins deux bagues de serrage pour des raccords avec au moins deux largeurs standard différentes soit possible.

4. Bague de serrage selon l'une des revendications 1 à 3,
**caractérisée**
**en ce que** les éléments de bague (4) comprennent un siège d'étanchéité (14) au niveau de l'extrémité tournée vers un joint d'étanchéité destiné à être installé.

5. Bague de serrage selon l'une des revendications 1 à 4,
**caractérisée**
- **en ce que** les éléments de bague (4) sont conçus au moins en partie sous la forme d'éléments de maintien (18) et
- **en ce que** les éléments de maintien (18) comprennent des éléments de guidage (20, 24, 26) orientés radialement vers l'intérieur, de préférence conçus pour être élastiques, pour un centrage et éventuellement un maintien d'un tube destiné à être introduit.

6. Bague de serrage selon la revendication 5,
**caractérisée**
**en ce qu'**au moins deux éléments de guidage (20, 24, 26) faisant saillie radialement vers l'intérieur sur des distances différentes sont constitués l'un derrière l'autre dans la direction axiale.

7. Bague de serrage selon l'une des revendications 1 à 6,
**caractérisée**
- **en ce que** les éléments de bague (4) sont conçus au moins en partie sous la forme d'éléments de fixation (28) et
- **en ce que** les éléments de fixation (28) comprennent respectivement au moins un élément de coupe (30) pour la fixation d'un tube destiné à être glissé à l'intérieur.

8. Bague de serrage selon la revendication 7,
**caractérisée**
**en ce que** les éléments de fixation (28) comprennent des éléments de protection (32) disposés dans la direction circonférentielle à côté des éléments de coupe (30), dans laquelle les éléments de protection (32) dépassent vers l'intérieur dans la direction radiale plus loin que les éléments de coupe (30).

9. Bague de serrage selon l'une des revendications 1 à 8,
**caractérisée**
**en ce qu'**une partie des éléments de bague (4) est conçue sous la forme d'éléments de maintien (18) et une partie des éléments de bague (4) est conçue sous la forme d'éléments de fixation (28).

10. Raccord pour le raccordement à un tube (42) destiné à être étanchéifié depuis l'extérieur,
- avec un corps de base (44),
- avec un élément de butée (46) constitué sur la circonférence dans le corps de base (44) et faisant saillie vers l'intérieur,
- avec une douille de compression (48) raccordée au corps de base (44), dans lequel la douille de compression (48) comprend une chambre (50) dirigée vers l'intérieur vers le tube (42) destiné à être reçu,
- avec une bague de serrage (2) disposée dans la chambre (50), dans lequel la bague de serrage (2) est composée d'une matière plastique et comprend une pluralité d'éléments de coupe (30) orientés à l'encontre de la direction d'extraction du tube (42) destiné à être glissé à l'intérieur, et
- avec un élément d'étanchéité (52) disposé dans la chambre (50) de manière adjacente à l'élément de butée (46),
- dans lequel la douille de compression (48) est appropriée pour étanchéifier depuis l'extérieur le tube (42) destiné à être raccordé, conjointement avec la bague de serrage (2), les éléments de coupe (30) et l'élément d'étanchéité (52),
**caractérisé**
- **en ce que** la bague de serrage (2) est conçue selon l'une des revendications 1 à 9.
